# EUROPÄISCHE PATENTSCHRIFT

(11) **EP 2 361 946 B1**
(45) Veröffentlichungstag und Bekanntmachung des Hinweises auf die Patenterteilung: **15.02.2017**
(21) Anmeldenummer: 11167152.5
(22) Anmeldetag: 20.07.2007
(51) Int. Cl.: C08G 77/60, C01B 33/027, C09D 183/16, C01B 33/107, H05H 5/04

(54) **POLYSILANVERARBEITUNG UND VERWENDUNG**
POLYSILANE PROCESSING AND USE
TRAITEMENT DE POLYSILANES ET UTILISATION

(30) Priorität: 20.07.2006 DE 102006034061
(43) Veröffentlichungstag der Anmeldung: 31.08.2011
(62) Teilanmeldung aus: 07786235.7
(73) Patentinhaber: Spawnt Private S.à.r.l., 1148 Luxembourg (LU)
(72) Erfinder: AUNER, Gudrun, Annette, 61479, Glashütten (DE); BAUCH, Christian, 06766, Bitterfeld-Wolfen (DE); LIPPOLD, Gerd, 04179, Leipzig (DE); DELTSCHEW, Rumen, 04319, Leipzig (DE)
(74) Vertreter: Epping - Hermann - Fischer

(56) Entgegenhaltungen:
- EP-A- 0 264 722
- EP-A1- 1 264 798
- WO-A-02/100776
- WO-A-2004/036631
- WO-A-2006/125425
- US-A- 4 070 444
- US-A- 4 683 147
- US-A1- 2004 152 287

## Beschreibung

WO 2006/125425 A1 offenbart in Beispielen 1 und 4 jeweils die Herstellung von halogenierten Polysilanen unter Verwendung von Mikrowellenstrahlung zur Erzeugung eines Plasmas.

Die Erfindung betrifft ein Verfahren zur endproduktbezogenen Herstellung von halogenierten Polysilanen nach Anspruch 1. Bevorzugte Ausführungsformen werden in den abhängigen Ansprüchen dargestellt.

Als Polysilane im Sinne des erfindungsgemäßen Verfahrens werden chemische Verbindungen bezeichnet, die sich durch mindestens eine direkte Bindung Si-Si auszeichnen. Polysilane können lineare Siₙ-Ketten und/oder Siₙ-Ringe enthalten sowie Kettenverzweigungen aufweisen.

Halogenierte Polysilane im Sinne des erfindungsgemäßen Verfahrens sind Polysilane, deren Substituenten weitgehend aus Halogenen X = F, Cl, Br, I sowie aus Wasserstoff bestehen. Halogenierte Polysilane im Sinne des erfindungsgemäßen Verfahrens sind wasserstoffarm mit einem Verhältnis H : X ≤ 1 : 5.

### Darstellung der Polysilane

Das halogenierte Polysilangemisch, das unter anderem zur Herstellung von Silizium dienen kann, wird in einem plasmachemischen Schritt aus SiX₄ und H₂ erzeugt. Dieses Verfahren ist in der Patentanmeldung Prof. Dr. Auner DE "Verfahren zur Herstellung von Silizium aus Halogensilanen" beschrieben WO 2006/125425 A1. Die Plasmareaktion kann zum Beispiel mittels kontinuierlicher Anregung (continuous wave) durchgeführt werden:
Ein H₂/SiX₄-Dampf-Gemisch wird mittels eines elektrischen oder elektromagnetischen Wechselfeldes angeregt und in den plasmaförmigen Zustand überführt. Dabei entstehen je nach Reaktionsbedingungen flüssige, halbfeste oder feste Gemische halogenierter Polysilane.

Unter niedermolekularen Polysilanen werden Polysilane mit 2 bis 6 Siliziumatomen, unter mittelmolekularen Polysilanen Polysilane mit 7 bis 14 Siliziumatomen und unter hochmolekularen Polysilanen solche mit mindestens 15 Siliziumatomen verstanden. Die gewählten Gruppen unterscheiden sich hinsichtlich ihrer Weiterverarbeitungsmöglichkeiten durch Destillation, Hydrierbarkeit oder Derivatisierbarkeit.

Es erweist sich erfindungsgemäß als besonders vorteilhaft, die Reaktionsbedingungen in dem Plasmareaktor gezielt so zu steuern, dass nicht nur irgendein halogeniertes Polysilangemisch erzeugt wird, sondern das für die weitere Verarbeitung vorteilhafteste Polysilangemisch.

Die zur weiteren Verwendung vorgesehenen spezifischen halogenierten Polysilane lassen sich insbesondere über die Molekularmassen sowie weitere geeignete Bestimmungsverfahren eindeutig bestimmen. Es lassen sich niedermolekulare, mittelmolekulare und hochmolekulare halogenierte Polysilane herstellen und charakterisieren, wobei cyclisch aufgebauten Polysilanen ebenfalls Bedeutung hinsichtlich der Polymerisation zu langkettigen Polysilanen zukommt.

Es erweist sich als vorteilhaft, die im Plasmareaktor vorgesehene Plasmaquelle in mehreren Stufen vorzusehen und alle denkbaren Maßnahmen zum zielgerichteten Energieeintrag in ein möglichst kleines Raumvolumen mit einem möglichst homogenen Reaktionsgemisch vorzusehen.

Dieses ermöglicht einen hohen Durchsatz des Reaktionsgemisches bei weitestgehend homogenen Reaktionsbedingungen und damit auch weitgehend homogenen Reaktionsprodukten.

Entscheidend für ein möglichst homogenes Reaktionsprodukt ist es, den Energieeintrag in das zu erzeugende Reaktionsplasma so homogen wie möglich zu gestalten und in dem Plasma möglichst homogene Reaktionsbedingungen zu schaffen. Erfindungsgemäß wird daher nicht nur eine Plasmaanregung vorzusehen, sondern mehrere Plasmaanregungen, die von dem Reaktionsgemisch hintereinander durchlaufen werden.

Um einen möglichst gleichmäßigen Energieeintrag in das von dem Reaktionsgemisch ausgefüllte Raumvolumen zu erhalten, erweist es sich als vorteilhaft, die Plasmaquelle zu pulsen, um eine gleichmäßigere Anregung des Reaktionsgemisches zu erhalten.

Das gleiche Ziel der homogeneren Anregung kann erreicht werden, in dem das Reaktionsgemisch einem zusätzlichen Elektronenfluss zur Herbeiführung eines stabileren Plasmas beziehungsweise einer besseren Plasmazündung ausgesetzt wird.

Zusätzlich kann das Reaktionsgemisch durch außen an dem Reaktor angebrachte elektromagnetische Spulen gequencht werden, womit das Reaktionsplasma einer Kompression mit anschließender Expansion unterworfen wird. Hier wird erfindungsgemäß auch vorgesehen, dass das Reaktionsgemisch eine auf die Wellenlänge der Anregungsquelle abgestimmte Resonatorkammer durchläuft.

Es erweist sich als vorteilhaft, das Plasma zusätzlich einer sichtbaren oder ultravioletten Lichteinstrahlung auszusetzen, um selektiv Ionen oder Moleküle im Reaktionsgemisch anregen zu können.

Entscheidend für einen kontinuierlichen Betrieb der Anlage ist, dass das Produktgemisch eine flüssige (zähflüssige) Konsistenz aufweist, damit es aus dem Reaktor herausfließen kann, um Verstopfungen zu vermeiden.

Die flüssige Konsistenz der erzeugten halogenierten Polysilangemische wird erreicht, in dem in dem Reaktor mit SiX₄-Überschuss und möglichst wenig H₂-Gehalt gefahren wird und die Temperatur des Reaktors unterhalb der Raumtemperatur gehalten wird.

Es ist daher vorteilhaft, dass die Molkonzentration von Wasserstoff im eingesetzten Gasgemisch kleiner ist als die Molkonzentration des SiX₄.

Die Charakterisierung der dargestellten Polysilane erfolgt am Beispiel einer chlorierten Polysilanmischung wie folgt:
Die maßanalytische Bestimmung des Chlorgehalts (Chlorid nach Mohr) einer in wässriger Lauge aufgelösten Probe liefert die empirische Formel SiCl₂₊ₓ für das Polysilangemisch, wobei x je nach mittlerer Kettenlänge zwischen 0 und 1 variiert, weshalb man auch von einem polymeren Dichlorsilylen sprechen kann, das aus Ringen (x=0) und Ketten (0<x≤1) besteht, wobei die Ketten mit -SiCl₃ Gruppen terminiert sind. Die Summenformel der Ringe lautet: SiₙCl₂ₙ und die der Ketten: SiₙCl₂ₙ₊₂.

EDX-Messungen bestätigen ein Atomverhältnis im Produkt von ca. Si:Cl = 1:2.

²⁹Si-NMR-Messungen zeigen, dass es sich bei dem Produkt je nach Erzeugungsbedingungen um ein komplexes Gemisch verschiedener chlorierter Polysilane handeln kann. Dabei liegen vorwiegend unverzweigte Verbindungen vor, wie das Fehlen von Signalen tertiärer (Cl-Si(SiR₃)₃) und quartärer (Si(SiR₃)₄) Siliziumatome belegt. ¹H-NMR-Messungen zeigen, dass das Produkt nur Spuren von Wasserstoff enthält (Si-H-Bindungen).

Die erhaltenen halogenierten Polysilangemische werden als niedermolekulare, mittelmolekulare und hochmolekulare Polysilane bezeichnet. Das niedermolekulare Polysilangemisch setzt sich vorwiegend aus Hexachlordisilan (Si:Cl = 1:3) und Octachlortrisilan S₃Cl₈ (Si:Cl = 1:2,67) zusammen. Diese beiden Komponenten können durch Destillation voneinander getrennt werden.

Trennung des Polysilangemisches:
Aus dem Produktgemisch können z. B. durch Destillation einzelne Komponenten bzw. Fraktionen erhalten werden.
   1. Hexachlordisilan entweicht zuerst bei einer Temperatur von ca. 144°C/1013 hPa, wobei auch schon bei der Polysilansynthese dampfförmig aus dem Gemisch abgetrennt und kondensiert (z. B. 0°C) werden kann.
   2. Die nächste Fraktion bilden die niederen chlorierten Oligosilane, wie z. B. das Octachlortrisilan, das Decachlortrisilan und das Decachlorisotetrasilan.
   3. Als Rückstand bleiben die Polysilane, deren Zersetzungstemperaturen unterhalb der Siedepunkte bei Normaldruck liegen.

Andere Trennverfahren wie Vakuumdestillation, Sublimation, Chromatographie, selektive Kristallisation, selektives Lösen und Zentrifugation sind ebenfalls geeignet, die Polysilane unterschiedlicher Molmassen voneinander zu trennen.

### Hydrierung der Polysilane:

Durch Hydrierung der halogenierten Polysilane können teil- und perhydrierte Verbindungen erhalten werden, d. h. die Halogenatome sind teilweise oder vollständig durch Wasserstoffatome ersetzt. Die Hydrierung kann in inerten Lösungsmitteln wie Ethern, Toluol etc. durchgeführt werden, wobei als Hydrierungsmittel vor allem Metall- und Metalloidhydride geeignet sind. Besonders hervorzuheben sind hier das Natriumaluminiumhydrid und verschiedene Borhydride wie z. B. Natriumborhydrid. Bei der Hydrierung sollte bei möglichst niedrigen Temperaturen (RT oder tiefer) gearbeitet werden, um eine Zersetzung der gebildeten Polysilane zu unterdrücken.

Zweckmäßigerweise werden nur die gewünschten Fraktionen hydriert, so dass ein möglichst einheitliches Produkt/Produktgemisch erhalten wird.

Potentielle Anwendungen der dargestellten Polysilane:
1. Die vollständige Pyrolyse des Produktgemisches oder einzelner Komponenten (halogenierte Polysilane) führt zur Bildung von Silizium, welches z. B. für die Photovoltaik oder die Mikroelektronik verwendet werden kann, wenn zur Herstellung des Polysilans entsprechend reine Ausgangsverbindungen eingesetzt werden.
2. Nach destillativer Trennung des Produktgemisches können die Komponenten mit hohem Dampfdruck zur Abscheidung von Siliciumschichten (z. B. a-Si, mono- oder polykristallinem Silicium) aus der Gasphase auf geheizten Substraten eingesetzt werden, wobei eine Wärmenachbehandlung je nach Trägermaterial induktiv oder durch Infrarotbestrahlung durchgeführt werden kann.
3. Hierzu eignen sich z. B. das Hexachlordisilan und die niederen Oligosilane, wobei Siliciumschichten bereits ab Temperaturen von 400-500°C sowohl in Gegenwart von H₂ auch ohne H₂ abgeschieden werden können. Hierzu werden die Substanzen dampfförmig, auch im Gemisch mit Trägergas (z. B. H₂), über das geheizte Substrat geleitet.
4. Die Komponenten mit geringem Dampfdruck können aus dem Produktgemisch heraus oder nach Abtrennung der Anteile mit höherem Dampfdruck ebenfalls zur Schichtabscheidung von Silicium genutzt werden, wenn sie in Substanz oder als Lösung auf ein heizbares Substrat aufgetragen und pyrolysiert werden.
5. Die Abscheidung von Silicium auf Substratoberflächen oder die Wärmenachbehandlung einer auf einem Substrat erzeugten Siliziumschicht kann zur Verbindungsbildung mit dem Substrat genutzt werden. So kann beispielsweise die Oberfläche von Metallsubstraten durch Erzeugung einer Metallsilicidschicht modifiziert werden, um eine erhöhte Abrasionsfestigkeit, größere Härte oder andere Oberflächenvergütung zu erreichen.
6. Durch Hydrierung des Produktgemisches oder einzelner Komponenten können vollständig oder teilweise hydrierte Polysilane erhalten werden, die sich besonders zur Abscheidung von Siliciumschichten auf Substraten bei niedriger Temperatur eignen, z. B. (SiH₂)ₙ → n Si + n H₂. Dabei können die leichtflüchtigen hydrierten Oligosilane für Abscheidungen aus der Gasphase verwendet werden. Die schwerer flüchtigen hydrierten Polysilane können dann unverdünnt oder als Lösung in inerten Lösemitteln (z. B. Toluol) auf einen Träger aufgebracht werden und durch geeignete Maßnahmen (z. B. Erhitzen, UV-Licht, etc.) unter Bildung einer Siliciumschicht zersetzt werden.
7. Durch Derivatisierung des Produktgemisches oder einzelner Komponenten lassen sich Organopolysilane erhalten, wie z. B. teil- oder permethylierte Verbindungen der allgemeinen Formeln SiₙXₐMe_{b} (a + b = 2n) und SiₙX_{c}Me_{d} (c + d = 2n + 2). Die Organopolysilane können dann, z. B. durch geeignete Kupplungsreaktionen (z. B. Wurtz-Kupplungen) in Polymere eingebaut oder auf bestehende Polymere aufgepfropft werden, um die besonderen optischen oder elektronischen Eigenschaften der Polysilanketten zu nutzen. In der anorganischen Synthesechemie sind verschiedene Methoden zur chemischen Umwandlung von unterschiedlich substituierten Polysilanen durch Kettenspaltung oder Ringöffnung sowie den partiellen Ersatz von Substituenten durch beispielsweise Halogene bekannt. Diese Methoden können auf das primäre Polysilangemisch, einzelne Fraktionen nach einer Auftrennung, abgetrennte reine Verbindungen oder Folgeprodukte der teilweisen oder vollständigen Substitution der Halogenatome in den entsprechenden Polysilanen angewendet werden. So lassen sich beispielsweise vollständig organosubstituierte cyclische Silane durch Ringöffnung in Ketten umwandeln, die nur an den Enden Halogensubstituenten tragen oder unter angepassten Bedingungen an vollständig organosubstituierten Cyclosilanen nur ein bzw. zwei Substituenten gegen Halogene austauschen, so dass das Ringsystem erhalten bleibt. Auch eine direkte Nutzung geeignet derivatisierter Polysilane, z. B. in Form dünner Schichten auf geeigneten Substraten, ist denkbar. Eine mögliche Verwendung der Organopolysilane liegt in der Herstellung von LED's.
8. Polysilane, die einzelne oder mehrere Wasserstoffsubstituenten enthalten, lassen sich durch Hydrosilylierung an C-C-Mehrfachbindungen addieren, so dass je nach Reaktionspartner und Reaktionsbedingungen Wasserstoffgegen Organosubstituenten ausgetauscht werden oder Copolymere mit organischen Verbindungen sowie Polysilan-Seitenketten an organischen Polymeren erzeugt werden.
9. Geeignete C-substituierte Polysilane erzeugen bei ihrem Einsatz als Precursoren Siliciumcarbid und geeignete Stickstoff-substituierte Polysilane erzeugen bei ihrem Einsatz als Precursoren Siliciumnitrid. Auf diese Weise sind nach angepasster Verarbeitung der Precursoren entsprechend auch Schichten aus Siliciumcarbid oder Siliciumnitrid zugänglich.
10. Nach Trennung (z. B. destillativ) können die halogenierten Polysilane auch als Feinchemikalien für Synthesen eingesetzt werden. So kann z. B. Hexachlordisilan, welches je nach Plasmabehandlung ein Hauptbestandteil des Produktgemisches ist, für Deoxygenierungsreaktionen in der Synthesechemie verwendet werden.

Das erfindungsgemäße Verfahren zur Verwendung von Polysilanen ist in 5 Zeichnungen dargestellt.

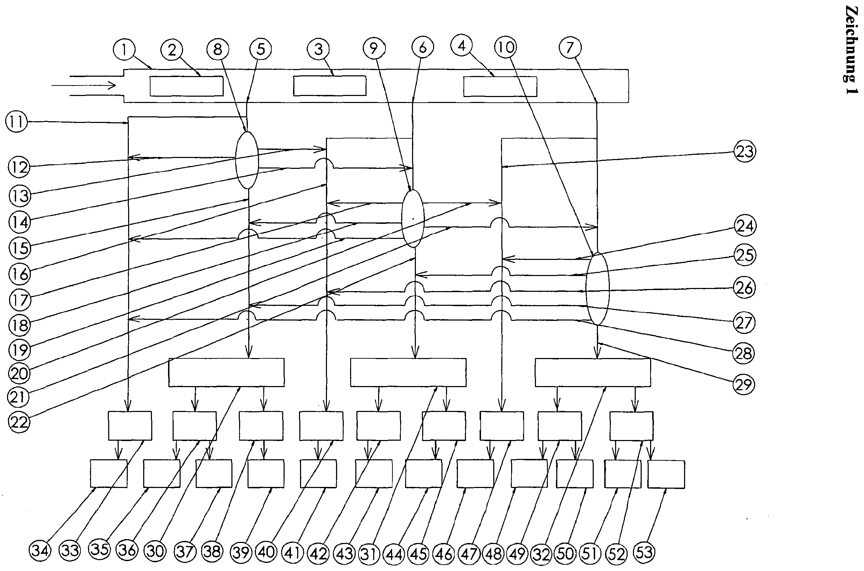

Zeichnung 1 stellt das gesamte Verfahrensschema zur Verarbeitung dar.

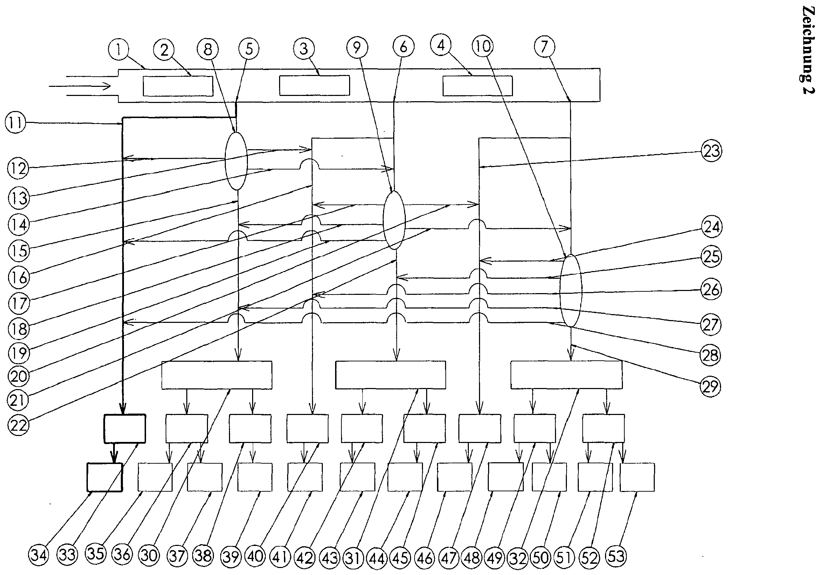

Zeichnung 2 stellt die Nutzung des Verfahrensschemas für die Abscheidung von Bulk-Silicium aus halogenierten Polysilanen kleiner Molmasse wie zum Beispiel Hexachlordisilan dar.

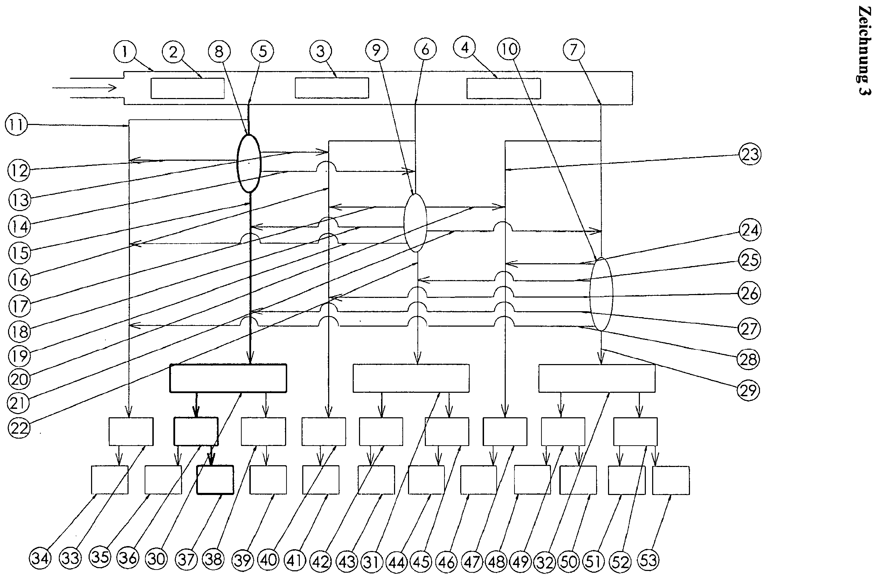

Zeichnung 3 stellt die Nutzung des Verfahrensschemas für die Hydrierung und die Abscheidung von Dünnschichtsilizium aus hydrierten Polysilanen kleiner Molmasse wie zum Beispiel Disilan dar.

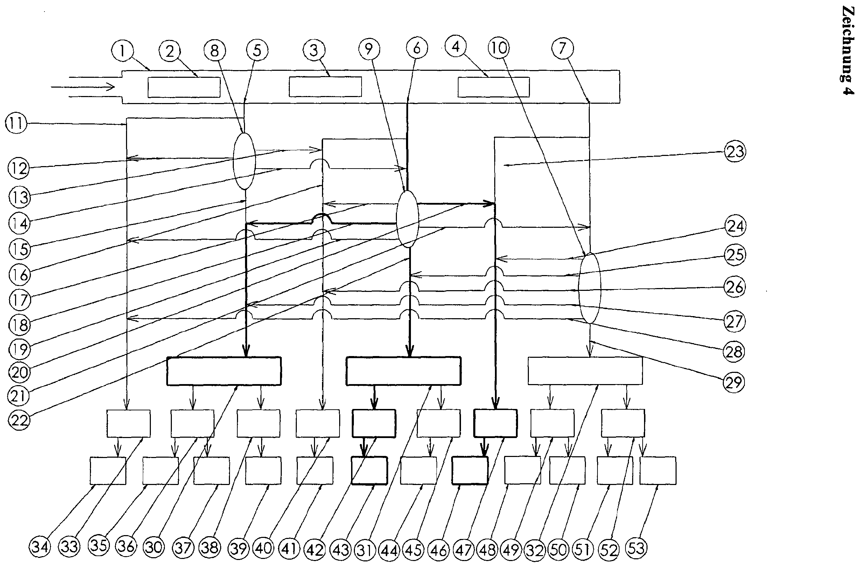

Zeichnung 4 stellt die Nutzung des Verfahrensschemas zur partiellen Methylierung halogenierter Polysilane mittlerer Molmasse wie zum Beispiel Decachlortetrasilan und die weitere Verarbeitung dieser Organochlorpolysilane durch die Wurtz-Kupplung dieser Organopolysilane an langkettige Polymere dar bei Rückführung der nieder- und hochmolekularen halogenierten Polysilane aus der Destillation in den Vorratsbehälter für nieder-/hochmolekulare Polysilane und die Abführung des hochmolekularen Destillationsrestes in die unmittelbare Abscheidung von Silicium.

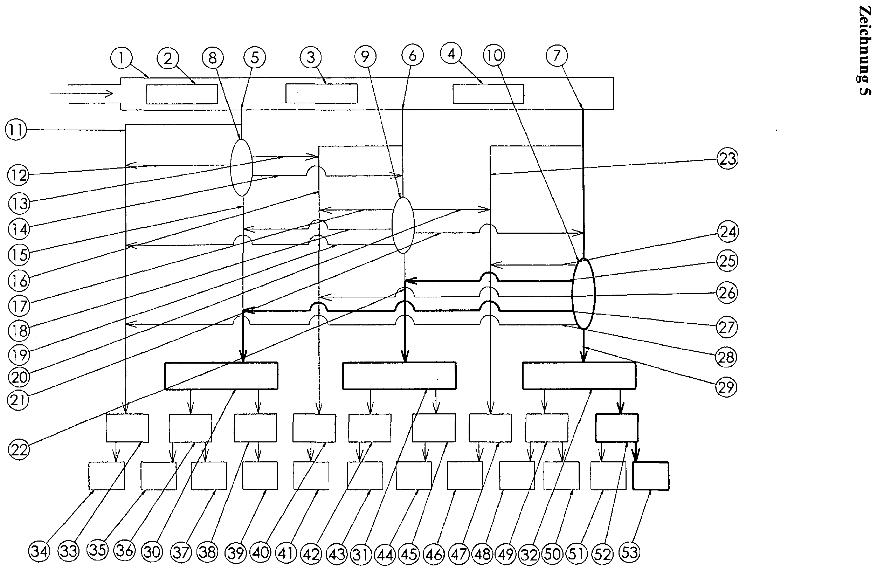

Zeichnung 5 stellt die Nutzung des Verfahrens zur Abtrennung von hochmolekularen halogenierten Polysilanen, deren Methylierung und anschließende Verarbeitung zu Organopolysilanen bei Rückführung der nieder- und mittelmolekularen Destillate in die jeweiligen Vorratsbehälter dar.

### Bezugszeichenliste:

1. Plasmareaktor
2. elektromagnetischer Hochfrequenzerzeuger I
3. elektromagnetischer Hochfrequenzerzeuger II
4. elektromagnetischer Hochfrequenzerzeuger III
5. Abführung vorwiegend niedermolekularer halogenierter Polysilane
6. Abführung vorwiegend mittelmolekularer halogenierter Polysilane
7. Abführung vorwiegend hochmolekularer halogenierter Polysilane
8. Destillation vorwiegend niedermolekularer halogenierter Polysilane
9. Destillation vorwiegend mittelmolekularer halogenierter Polysilane
10. Destillation vorwiegend hochmolekularer halogenierter Polysilane
11. Abführung undestillierter niedermolekularer halogenierter Polysilane
12. Abführung Destillationsrückstände
13. Abführung Destillationsrückstände
14. Abführung Destillationsrückstände
15. Abführung niedermolekularer Destillate
16. Abführung undestillierter mittelmolekularer halogenierter Polysilane
17. Abführung Destillationsrückstände
18. Abführung Destillationsrückstände
19. Abführung Destillationsrückstände
20. Abführung Destillationsrückstände
21. Abführung Destillationsrückstände
22. Abführung mittelmolekularer Destillate
23. Abführung undestillierter hochmolekularer halogenierter Polysilane
24. Abführung Destillationsrückstände
25. Abführung Destillationsrückstände
26. Abführung Destillationsrückstände
27. Abführung Destillationsrückstände
28. Abführung Destillationsrückstände
29. Abführung hochmolekularer Destillate
30. Vorratsbehälter niedermolekularer halogenierter Polysilane
31. Vorratsbehälter mittelmolekularer halogenierter Polysilane
32. Vorratsbehälter hochmolekularer halogenierter Polysilane
33. Vorratsbehälter vorwiegend niedermolekularer halogenierter Polysilangemische
34. Abscheidevorrichtung für Silicium aus niedermolekularen Polysilangemischen
35. Abscheidevorrichtung für Siliziumschichten aus gasförmigen niedermolekularen hydrierten Polysilanen
36. Hydrierungsreaktor
37. Speicherbehälter flüssiger niedermolekularer hydrierter Polysilane
38. Methylierungsreaktor
39. Speicherbehälter niedermolekularer Organopolysilane
40. Vorratsbehälter vorwiegend mittelmolekularer halogenierter Polysilangemische
41. Abscheidevorrichtung für Silizium aus mittelmolekularen Polysilangemischen
42. Hydrierungsreaktor
43. Abscheidevorrichtung für Siliziumschichten aus gasförmigen mittelmolekularen hydrierten Polysilanen
44. Speicherbehälter mittelmolekularer Organopolysilane
45. Methylierungsreaktor
46. Abscheidevorrichtung für Silizium aus hochmolekularen Polysilangemischen
47. Vorratsbehälter vorwiegend hochmolekularer halogenierter Polysilangemische
48. Abscheidevorrichtung für Siliziumschichten aus gasförmigen hochmolekularen hydrierten Polysilanen
49. Hydrierungsreaktor
50. Speicherbehälter flüssiger hochmolekularer hydrierter Polysilane
51. Speicherbehälter gasförmiger hochmolekularer Organopolysilane
52. Methylierungsreaktor
53. Speicherbehälter flüssiger hochmolekularer Organopolysilane

## Patentansprüche

1. Verfahren zur endproduktbezogenen Herstellung und Weiterverarbeitung von chlorierten Polysilangemischen zur Erzeugung von Silizium und/oder siliziumbasierten Produkten, **dadurch gekennzeichnet, dass** je nach erzeugtem Polysilangemisch niedermolekularer Polysilanen mit 2 bis 6 Siliziumatomen, mittelmolekularer Polysilanen mit 7 bis 14 Siliziumatomen oder hochmolekularer Polysilanen mit mindestens 15 Siliziumatomen und gewünschtem End- und/oder Zwischenprodukt die chlorierten Polysilangemische plasmachemisch aus SiCl₄ und H₂, hergestellt werden und wobei zur Steuerung der Zusammensetzung des Polysilangemisches mehrere Plasmareaktoren hintereinander von dem zugeführten Reaktionsgemisch aus SiCl4und H2 durchlaufen werden und die mittlere Molmasse des Polysilangemisches nach Durchlaufen eines jeden Plasmareaktors zunimmt, wobei das Polysilangemisch ein polymeres Dichlorsilylen mit der empirischen Formel SiCl₂₊ₓ ist, das aus Ringen (x=0) mit der Summenformel SiₙCl₂ₙ und Ketten (0<x≤1) mit der Summenformel SiₙCl₂ₙ₊₂ besteht, wobei die Ketten mit -SiCl₃ Gruppen terminiert sind.

2. Verfahren zur endproduktbezogenen Herstellung und Weiterverarbeitung von plasmachemisch hergestellten chlorierten Polysilangemischen gemäß Anspruch 1 **dadurch gekennzeichnet, dass** je nach Anzahl der Plasmareaktoren Polysilangemische von vorwiegend niederer, mittlerer und hoher Molmasse erhalten werden, die einer Weiterverarbeitung zugeführt werden.

3. Verfahren zur endproduktbezogenen Herstellung und Weiterverarbeitung von plasmachemisch hergestellten chlorierten Polysilangemischen gemäß Anspruch 1 oder 2 **dadurch gekennzeichnet, dass** sich in den Plasmareaktoren Plasmapulsung und/oder zusätzliche elektrische Entladung und/oder Plasmaquenchen abwechseln.

4. Verfahren zur endproduktbezogenen Herstellung und Weiterverarbeitung von plasmachemisch hergestellten chlorierten Polysilangemischen gemäß Anspruch 1 bis 3 **dadurch gekennzeichnet, dass** das Plasma in den Plasmareaktoren zusätzlich mit Infrarot- oder sichtbarer- oder Ultraviolettstrahlung bestrahlt wird.

5. Verfahren zur endproduktbezogenen Herstellung und Weiterverarbeitung von chlorierten Polysilangemischen gemäß Anspruch 1 bis 4 **dadurch gekennzeichnet, dass** die nach einer Destillation erhaltenen Polysilane mit niederer oder mittlerer oder hoher Molmasse einer Hydrierung unterworfen und teil- bzw. perhydrierte Verbindungen erhalten werden.

6. Verfahren zur endproduktbezogenen Herstellung und Weiterverarbeitung von chlorierten Polysilangemischen gemäß Anspruch 1 bis 5 **dadurch gekennzeichnet, dass** die Hydrierung in Ethern und/oder aromatischen Lösemitteln durchgeführt wird.

7. Verfahren zur endproduktbezogenen Herstellung und Weiterverarbeitung von chlorierten Polysilangemischen gemäß Anspruch 1 bis 6 **dadurch gekennzeichnet, dass** als Hydrierungsmittel Metall- und Metalloidhydride eingesetzt werden.

8. Verfahren zur endproduktbezogenen Herstellung und Weiterverarbeitung von chlorierten Polysilangemischen gemäß Anspruch 1 bis 7 **dadurch gekennzeichnet, dass** die Hydrierung bei Temperaturen unterhalb 20°C durchgeführt wird.

9. Verfahren zur endproduktbezogenen Herstellung und Weiterverarbeitung von Polysilangemischen gemäß Anspruch 1 bis 8 **dadurch gekennzeichnet, dass** niedermolekulare chlorierte Polysilangemische unmittelbar aus der Gasphase zur Abscheidung von Silizium über eine erhitzte Oberfläche geleitet und dort pyrolytisch zersetzt werden.

10. Verfahren zur endproduktbezogenen Herstellung und Weiterverarbeitung von chlorierten Polysilangemischen gemäß Anspruch 1 bis 9 **dadurch gekennzeichnet, dass** flüssige chlorierte Polysilangemische oder deren Lösungen in geeigneten Lösungsmitteln auf Abscheideflächen aufgetragen und dort durch Pyrolyse zersetzt werden, wobei dort Silizium abgeschieden wird.

11. Verfahren zur endproduktbezogenen Herstellung und Weiterverarbeitung von chlorierten Polysilangemischen gemäß Anspruch 1 bis 10 **dadurch gekennzeichnet, dass** hochreine hydrierte Polysilane ausgewählter Molekularmassen in der Gasphase über erhitzte Oberflächen geleitet werden und sich auf diesen Oberflächen durch Pyrolyse Silizium abscheidet.

12. Verfahren zur endproduktbezogenen Herstellung und Weiterverarbeitung von chlorierten Polysilangemischen gemäß Anspruch 5 bis 8 **dadurch gekennzeichnet, dass** hydrierte Polysilane ausgewählter Molekularmassen in der Flüssigphase oder in Lösung auf geeignete Oberflächen aufgetragen und durch Erhitzen zersetzt werden, wodurch sich auf diesen Oberflächen Silizium abscheidet.

13. Verfahren zur endproduktbezogenen Herstellung und Weiterverarbeitung von chlorierten Polysilangemischen gemäß Anspruch 1 bis 12 **dadurch gekennzeichnet, dass** Silizium aus chlorierten Polysilangemischen oberhalb 400°C oder hydrierten Polysilanen oberhalb 200°C als beliebig dicke Schicht abgeschieden wird.

14. Verfahren zur endproduktbezogenen Herstellung und Weiterverarbeitung von chlorierten Polysilangemischen gemäß Anspruch 9 bis 13 **dadurch gekennzeichnet, dass** abgeschiedene Siliziumschichten einer Wärmenachbehandlung unterzogen werden.

## Claims

1. A method for the finished-product-related production and further processing of mixtures of chlorinated polysilanes for the generation of silicon and/or silicon-based products, **characterized in that**, depending on the generated polysilane mixture of low-molecular-weight polysilanes having 2 to 6 silicon atoms, medium-molecular-weight polysilanes having 7 to 14 silicon atoms or high-molecular-weight polysilanes having at least 15 silicon atoms and the desired finished product and/or intermediate product, the chlorinated polysilane mixtures are produced plasma-chemically from SiCl₄ and H₂ and wherein for the control of the composition of the polysilane mixture one or more plasma reactors in succession are passed through by the reaction mixture feed composed of SiCl4 and H2 and the mean molar mass of the polysilane mixture increases after passage through each plasma reactor, wherein the polysilane mixture is a polymeric dichlorosilane with the empirical formula SiCl₂₊ₓ, which consists of rings (x=0) with the molecular formula SiₙCl₂ₙ and chains (0 < x ≤ 1) with the molecular formula SiₙCl₂ₙ₊₂, wherein the chains terminate with -SiCl₃ groups.

2. The method for the finished-product-related production and further processing of plasma-chemically produced mixtures of chlorinated polysilanes according to claim 1, **characterized in that** depending on the number of plasma reactors, polysilane mixtures of predominantly low, medium or high molar mass are obtained, which are fed to a further processing.

3. The method for the finished-product-related production and further processing of plasma-chemically produced mixtures of chlorinated polysilanes according to claim 1 or 2, **characterized in that characterized in that** plasma pulsing and/or additional electrical discharge and/or plasma quenching alternate in the plasma reactor.

4. The method for the finished-product-related production and further processing of plasma-chemically produced mixtures of chlorinated polysilanes according to claims 1 to 3, **characterized in that** the plasma in the plasma reactor is additionally irradiated with infrared radiation, visible radiation or ultraviolet radiation.

5. The method for the finished-product-related production and further processing of mixtures of chlorinated polysilanes according to claims 1 to 4, **characterized in that** the polysilanes having low, medium or high molar mass obtained after the distillation are hydrogenated, and partially hydrogenated or perhydrogenated compounds are obtained.

6. The method for the finished-product-related production and further processing of mixtures of chlorinated polysilanes according to claims 1 to 5, **characterized in that** the hydrogenation is carried out in ethers and/or aromatic solvents.

7. The method for the finished-product-related production and further processing of plasma-chemically produced mixtures of chlorinated polysilanes according to claims 1 to 6, **characterized in that** metal hydrides and metalloid hydrides are used as hydrogenation agents.

8. The method for the finished-product-related production and further processing of mixtures of chlorinated polysilanes according to claims 1 to 7, **characterized in that** the hydrogenation is carried out at temperatures below 20°C.

9. The method for the finished-product-related production and further processing of mixtures of chlorinated polysilanes according to claims 1 to 8, **characterized in that** mixtures of low-molecular-weight chlorinated polysilanes are passed over a heated surface directly from the gaseous phase for the deposition of silicon and are pyrolytically decomposed there.

10. The method for the finished-product-related production and further processing of mixtures of chlorinated polysilane mixtures according to claims 1 to 9, **characterized in that** liquid chlorinated polysilane mixtures or solutions thereof in suitable solvents are applied onto deposition surfaces and are decomposed there by pyrolysis, with silicon being deposited there.

11. The method for the finished-product-related production and further processing of mixtures of chlorinated polysilane mixtures according to claims 1 to 10, **characterized in that** the hydrogenated polysilanes of high purity of selected molecular weights in the gaseous phase are passed over heated surfaces and silicon is deposited on these surfaces by pyrolysis.

12. The method for the finished-product-related production and further processing of mixtures of chlorinated polysilanes according to claims 5 to 8, **characterized in that** hydrogenated polysilanes of selected molar masses are applied onto suitable surfaces in the liquid phase or in solution and are decomposed by heating, whereby silicon is deposited on these surfaces.

13. The method for the finished-product-related production and further processing of mixtures of chlorinated polysilanes according to claims 1 to 12, **characterized in that** silicon is deposited as a film of any thickness from mixtures of chlorinated polysilanes above 400°C or hydrogenated polysilanes above 200°C.

14. The method for the finished-product-related production and further processing of mixtures of chlorinated polysilanes according to claims 9 to 13, **characterized in that** deposited silicon films are subjected to a thermal post-treatment.

## Revendications

1. Procédé pour la production liée à un produit fini et pour un traitement ultérieure de mélanges de polysilanes halogénés en vue de la génération de produits en silicium et/ou à base de silicium, **caractérisé en ce que**, en fonction du mélange de polysilanes généré de polysilanes de faible poids moléculaire présentant de 2 à 6 atomes de silicium, de polysilanes de poids moléculaire moyen présentant de 7 à 14 atomes de silicium et de polysilanes de poids moléculaire élevé présentant au moins 15 atomes de silicium, et du produit fini souhaité et/ou produit intermédiaire, dans lequel, pour le contrôle de la composition du mélange de polysilanes, un ou plusieurs réacteurs à plasma sont traversés de manière successive par la mélange de réaction alimentée composée de silane halogéné et de H2, et la masse molaire moyenne du mélange de polysilanes augmente après passage à travers chaque réacteur à plasma dans lequel le mélange de polysilanes est un dichlorosilane polymérique ayant la formule empirique de SiCl₂₊ₓ, lequel consiste en des anneaux (x=0) ayant la formule moléculaire SiₙCl₂ₙ et de chaînes (0<x≤1) ayant la formule moléculaire SiₙCl₂ₙ₊₂, dans lequel les chaînes sont terminées par des groupes -SiCl₃ et dans lequel le procédé est exécuté de manière continue.

2. Procédé pour la production liée à un produit fini et pour un traitement supplémentaire de mélanges de polysilanes chlorés selon la revendication 1, **caractérisé en ce que**, selon la nombre des réacteurs à plasma des mélanges de polysilanes présentant de manière prédominante des poids moléculaires faible, moyen ou élevé sont obtenus, qui sont fournies vers un traitement supplémentaire.

3. Procédé pour la production liée à un produit fini et pour un traitement supplémentaire de mélanges produits par voie chimique à plasma de polysilanes halogénés selon la revendication 1 ou 2, **caractérisé en ce qu'**une émission de plasma pulsé et/ou une décharge électrique supplémentaire et/ou une désactivation de plasma sont alternées dans le réacteur à plasma.

4. Procédé pour la production liée à un produit fini et pour un traitement supplémentaire de mélanges produits par voie chimique à plasma de polysilanes chlorés selon l'une quelconque des revendications 1 à 3, **caractérisé en ce que** le plasma dans le réacteur à plasma est en outre irradié avec une radiation infrarouge, une radiation visible ou une radiation ultraviolette.

5. Procédé pour la production liée à un produit fini et pour un traitement supplémentaire de mélanges produits de polysilanes chlorés selon l'une quelconque des revendications 1 à 4, **caractérisé en ce que** des polysilanes présentant une masse molaire faible, moyenne, ou élevée obtenus après une distillation sont hydrogénés, et des composés partiellement hydrogénés ou perhydrogénés sont obtenus.

6. Procédé pour la production liée à un produit fini et pour un traitement supplémentaire de mélanges produits de polysilanes chlorés selon l'une quelconque des revendications 1 à 5, **caractérisé en ce que** l'hydrogénation est réalisée dans des éthers et/ou des solvants aromatiques.

7. Procédé pour la production liée à un produit fini et pour un traitement supplémentaire de mélanges produits par voie chimique à plasma de polysilanes halogénés selon l'une quelconque des revendications 1 à 6, **caractérisé en ce que** des hydrures métalliques et des hydrures métalloïdes sont utilisés comme agents d'hydrogénation.

8. Procédé pour la production liée à un produit fini et pour un traitement supplémentaire de mélanges produits de polysilanes chorés selon l'une quelconque des revendications 1 à 7, **caractérisé en ce que** l'hydrogénation est réalisée à des températures inférieures à 20 °C.

9. Procédé pour la production liée à un produit fini et pour un traitement supplémentaire de mélanges de polysilanes chlorés selon l'une quelconque des revendications 1 à 8, **caractérisé en ce que** des mélanges de polysilanes chlorés présentant un faible poids moléculaire sont passés sur une surface chauffée directement à partir de la phase gazeuse pour le dépôt de silicium et y sont décomposés de manière pyrolytique.

10. Procédé pour la production liée à un produit fini et pour un traitement supplémentaire de mélanges de polysilanes chlorés selon l'une quelconque des revendications 1 à 9, **caractérisé en ce que** des mélanges de polysilanes hydrogénés liquides, ou solutions de ceux-ci dans des solvants appropriés, sont appliqués sur des surfaces de dépôt et y sont décomposés par pyrolyse, du silicium y étant ainsi déposé.

11. Procédé pour la production liée à un produit fini et pour un traitement supplémentaire de mélanges de polysilanes chlorés selon l'une quelconque des revendications 1 à 10, **caractérisé en ce que** des polysilanes hydrogénés de haute pureté de masses molaires sélectionnées sont passés sur des surfaces chauffées pendant la phase gazeuse et **en ce que** silicium est déposé sur cettes surfaces de manière pyrolytique.

12. Procédé pour la production liée à un produit fini et pour un traitement supplémentaire de mélanges de polysilanes chlorés selon l'une quelconque des revendications 5 à 8, **caractérisé en ce que** des polysilanes hydrogénés de masses molaires sélectionnées sont appliqués sur des surfaces appropriées dans la phase liquide ou en solution, et sont décomposés par chauffage, du silicium étant de ce fait déposé sur ces surfaces.

13. Procédé pour la production liée à un produit fini et pour un traitement supplémentaire de mélanges de polysilanes chlorés selon l'une quelconque des revendications 1 à 12, **caractérisé en ce que** le silicium est déposé sous la forme d'une couche d'épaisseur quelconque à partir de mélanges de polysilanes chlorés au-dessus de 400 °C ou de polysilanes hydrogénés au-dessus de 200 °C.

14. Procédé pour la production liée à un produit fini et pour un traitement supplémentaire de mélanges de polysilanes chlorés selon l'une quelconque des revendications 9 à 13, **caractérisé en ce que** les films de silicium déposés sont soumis à un post-traitement thermique.
